# FASCICULE DE BREVET EUROPEEN

(11) **EP 1 637 400 B1**
(45) Date de publication et mention de la délivrance du brevet: **15.04.2009**
(21) Numéro de dépôt: 05300743.1
(22) Date de dépôt: 13.09.2005
(51) Int. Cl.: B60R 9/058

(54) **Agencement d'étanchéité pour la porte de véhicule automobile et barre de toit correspondante**
Dichtungsanordnung für eine KFZ-Tür und dazugehöriger Dachträger
Seal arrangement for a vehicle door and corresponding roof rack

(30) Priorité: 17.09.2004 FR 0452082
(43) Date de publication de la demande: 22.03.2006
(73) Titulaire: RENAULT S.A.S., 92100 Boulogne Billancourt (FR)
(72) Inventeur: Bettray, Guy, 78280 GUAYNCOURT (FR); Cousseau, Sylvain, 78000 VERSAILLES (FR); Denis, Jean, 92420 VAUCRESSON (FR); Fomel, Gérard, 28000 CHARTRES (FR)

(56) Documents cités:
- DE-A1- 3 124 103
- DE-A1- 3 151 405
- DE-A1- 3 309 132
- DE-A1- 3 630 142
- DE-A1- 3 836 687
- DE-A1- 10 236 976
- GB-A- 2 147 860

## Description

La présente invention concerne un agencement d'étanchéité du côté de caisse d'un véhicule automobile, un dispositif de barre de toit et un véhicule automobile équipé d'un tel agencement.

Elle concerne plus particulièrement les agencements montés entre cette caisse et un cadre de porte, qui comportent au moins un premier moyen de fixation sur lequel peut être monté un dispositif de barres de toit et qui comportent au moins un joint d'étanchéité solidaire de la caisse.

Des joints d'étanchéité sont mis en place entre le cadre de porte et le côté de caisse, afin que l'étanchéité des portes latérales soit assurée. Ces joints présentent la forme générale d'un tube en caoutchouc destiné à assurer l'étanchéité de l'ouvrant par compression d'une partie mobile de celui-ci sur une partie fixe immobilisée sur la carrosserie du véhicule par un adhésif double face sur lequel le joint est articulé. Le document DE 3 630 142 divulgue un tel agencement avec les caractéristiques du préambule de la revendication 1.

On observe, lors de la mise en place par l'utilisateur des barres de toit adaptées à son véhicule, un écrasement des joints d'étanchéité évoqués précédemment. Un tel écrasement rend le joint inefficace par la suite lorsque les barres de toit sont retirées et que ce joint écrasé doit de nouveau assurer l'étanchéité entre le cadre de porte et le côté de caisse. Le document FR2834488 vise à contourner ce problème en divulguant un joint d'étanchéité dont la partie compressible est montée sur la partie fixe par l'intermédiaire d'une charnière, une extrémité de la partie compressible opposée à la charnière permettant l'encliquetage sur la partie fixe lors d'une utilisation sans barre de toit, et permettant la fixation de ce joint sur le pied de barre de toit lorsque celui-ci est inséré par l'utilisateur entre la partie fixe du joint et la partie compressible décliquetée.

Cette solution présente le même inconvénient précédemment cité. Le joint est déformé plastiquement lors de l'utilisation des barres de toit, et présente le risque, suite à un nombre limité de montage et démontage des barres de toit, de ne plus être efficace et de devoir être remplacé. En effet, l'écrasement prolongé du joint implique sa déformation permettant par la suite à l'air de s'engouffrer entre les portes et le côté de caisse, ce qui crée des turbulences entendues dans l'habitacle, très gênantes pour les occupants. De plus, cet écrasement du joint occasionne par la suite des infiltrations d'eau susceptibles de corroder par exemple les charnières de portes ou les gâches de serrure.

Un des objectifs de l'invention est donc de proposer un agencement d'étanchéité du côté de caisse qui assure une étanchéité correcte lors de l'utilisation du véhicule avec des barres de toit, et dont l'efficacité, lorsque les barres de toit ont été retirées, est la même qu'avant l'utilisation des barres de toit.

En réponse à des objectifs que l'on retrouve invariablement chez les différents constructeurs automobiles, la présente invention se veut également peu coûteuse et peu encombrante.

Pour répondre à ces objectifs, l'invention propose un agencement selon les caractéristiques de la partie caractérisante de la revendication 1.

Selon différentes caractéristiques de la présente invention :
- le dispositif de barres de toit est formé d'au moins un pied de barre apte à coopérer avec le premier moyen de fixation pour être solidarisé à la structure du véhicule, et en ce que la zone de stockage est formée entre ce pied et la structure du véhicule sur laquelle le pied est en appui.
- la zone de stockage est formée par un embouti réalisé dans le pied de barre de toit.
- la zone de stockage présente des dimensions aptes à contenir le joint d'étanchéité.
- la zone de stockage est réalisée à proximité du premier moyen de fixation, la zone de stockage étant située plus proche de l'extérieur du véhicule que ce premier moyen de fixation.
- le pied de barre de toit est formé d'au moins une zone centrale arrondie qui présente, lorsque le pied est fixé sur la caisse, une forme sensiblement complémentaire de celle du cadre de porte.

L'invention concerne également une barre de toit pour véhicule automobile, du type comportant au moins un pied de barre apte à coopérer avec un premier moyen de fixation pour être solidarisé à la structure du véhicule, caractérisé en ce qu'une zone de stockage, disposée entre ce pied et la structure du véhicule sur laquelle le pied est en appui, est formée par la réalisation d'un embouti dans le pied de barre de toit.

Selon différentes caractéristiques, la zone de stockage présente des dimensions aptes à contenir l'ensemble d'un joint d'étanchéité, et cette zone de stockage est réalisée à proximité d'une patte de fixation formée par une extrémité du pied de barre, cette patte de fixation étant apte à coopérer avec le premier moyen de fixation.

L'invention concerne également un véhicule automobile qui comporte au moins un agencement d'étanchéité tel que décrit ci dessus.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'un véhicule équipé de barres de toit et d'un agencement d'étanchéité selon l'invention,
- la figure 2 est une vue en coupe d'un côté de caisse du véhicule représenté à la figure 1, pour lequel les barres de toit n'ont pas été installées ou ont été retirées,
- la figure 3 est une vue en coupe du côté de caisse du véhicule représenté à la figure 2, pour lequel les barres de toit ont été installées.

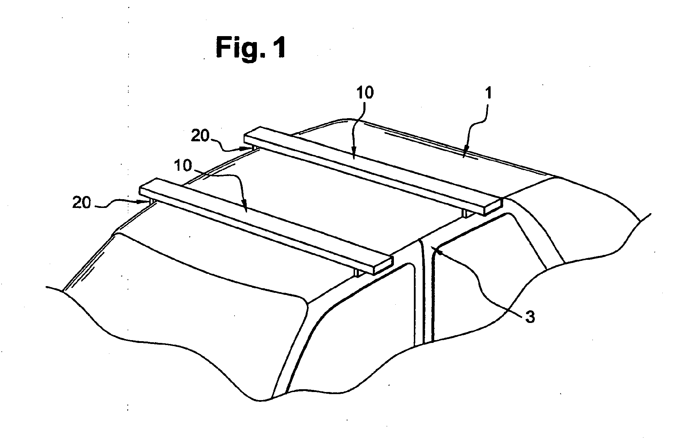

Tel que représenté à la figure 1, au moins deux barres de toit 10 sont positionnées au dessus du toit 1 d'un véhicule automobile. Chaque barre 10 est munie sensiblement à ses extrémités 11 d'un pied de barres de toit 20, ces pieds 20 étant fixés sur les côtés de caisse du véhicule. Il sera compris que l'orientation des barres de toit 10 représentée sur la figure 1 n'a qu'une valeur illustrative et que celles-ci pourraient être positionnées différemment sans sortir du cadre de l'invention.

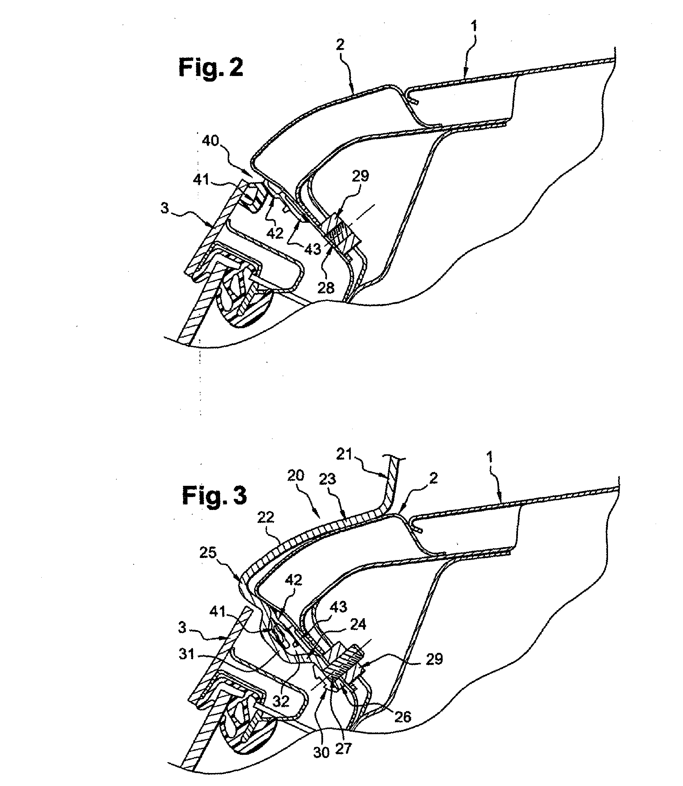

Un pied de barre de toit 20 présente généralement une première partie de support 21 sensiblement verticale sur laquelle vient être fixée la barre de toit 10 correspondante, et une deuxième partie de fixation 22 assurant la solidarisation de ce pied 20 à la structure du véhicule. Cette partie de fixation 22, telle que représentée à titre d'exemple aux figures 2 et 3, est formée d'une première zone 23 sensiblement plane qui prolonge la première partie de support 21 et qui couvre le côté de caisse 2, et une deuxième zone sensiblement plane 24 qui est plaquée contre le côté de caisse 2, en regard du cadre de porte 3. Ces deux zones 23 et 24 sensiblement planes sont reliées entre elles par une zone centrale arrondie 25, de sorte que cette partie de fixation 22 recouvre la forme du côté de caisse 2 située entre le pavillon de toit 1 et le cadre de porte 3.

La deuxième zone 24 de la partie de fixation 22 comporte une patte de fixation 26 dans laquelle est réalisé un premier orifice 27, de sorte que la mise en position du pied de barre 20 fasse correspondre ce premier orifice 27 à un deuxième orifice 28 réalisé dans le côté de caisse 2. Un écrou 29 est solidarisé à l'intérieur du côté de caisse 2 en sortie de ce deuxième orifice 28, de sorte que le pied de barre de toit 20 peut être immobilisé par rapport au côté de caisse 2 par le vissage d'une vis de fixation 30, à travers le premier et le second orifice 27 et 28, dans l'écrou 29. Telle que représentée, la patte de fixation 26 doit être accessible pour tout utilisateur une fois la porte correspondante ouverte afin de visser le pied de barre de toit 20 dans le côté de caisse 2. Toutefois, elle ne doit pas être trop proche de la zone centrale arrondie 25, qui correspond à l'ouverture entre le côté de caisse 2 et le cadre de porte 3, pour éviter d'une part que des projections extérieures ne viennent encrasser cette fixation, et d'autre part pour éviter que la tête de vis 30 ne gène la fermeture de la porte.

Le pied de barre de toit 20 présente, à proximité de la patte de fixation 26, un embouti 31 de telle sorte qu'une zone de stockage 32 est aménagée entre le côté de caisse 2 et le pied de barre de toit 20 lorsque celui-ci est monté sur le véhicule. La dimension de la zone de stockage 32 peut ainsi varier en fonction des dimensions de l'embouti 31 et peut donc être modifiée lors de la conception du pied de barre de toit 20.

Un joint de double étanchéité 40 comporte de manière classique, une première partie mobile 41 dont la compression sur une seconde partie fixe 42 immobilisée à la carrosserie du véhicule, par exemple par un adhésif double face, vise à assurer l'étanchéité de l'ouvrant.

Il peut également être prévu un joint d'étanchéité 40 présentant une troisième partie 43 présentant la forme d'un ergot en coupe transversale, destiné à guider le système automatisé de montage du joint sur la chaîne de fabrication dans la phase de collage sur le côté de caisse assurant ainsi un positionnement précis du joint.

L'ensemble des parties du joint d'étanchéité fixes par rapport au côté de caisse, à savoir la seconde partie fixe 42 et éventuellement la troisième partie 43 si le joint 40 en est muni, est positionné par rapport au côté de caisse 2, de sorte que ces parties fixes sont inclues dans la zone de stockage 32 lorsque les pieds de barre de toit 20 sont mis en position. Seule la partie mobile 41 est située initialement à l'extérieur de cette zone 32.

La manipulation du joint d'étanchéité 40, dans le cadre de l'invention, afin de permettre la fixation de barres de toit 10 sur le véhicule va être explicitée en relation avec les figures 2 et 3. L'utilisateur, souhaitant fixer des barres de toit 10 sur son véhicule, ouvre au moins une porte du véhicule puis positionne le joint 40 et en particulier la première partie mobile 41 dans une position escamotée sensiblement contre la seconde partie fixe 42 de ce joint 40. Cet escamotage est réalisé le long du joint 40 au moins au niveau des zones d'emplacement des pied de barres de toit 20 préconisées par le constructeur.

L'utilisateur engage alors la patte de fixation 26 du pied de barre de toit 20 en regard du deuxième orifice 28 réalisé dans le côté de caisse 2, tout en s'assurant que la première partie mobile 41 du joint d'étanchéité 40 est entièrement escamotée sous l'embouti 31 du pied de barre de toit 20. Les dimensions étudiées de l'embouti 31 permettent alors au joint d'étanchéité 40 d'être positionné intégralement dans la zone de stockage 32, sans contrainte plastique. Il reste alors à l'utilisateur à visser les moyens de fixations 30 du pied de barre de toit 20 sur la structure du véhicule.

Le démontage des barres de toit 10 s'effectue de manière tout aussi simple en effectuant les opérations décrites ci-dessus à l'envers. Le joint d'étanchéité 40 n'ayant pas été comprimé au-delà de sa limite élastique, il reprend sa forme et sa position initiale dès que le pied de barre de toit 20 a été enlevé et que le joint 40 a été libéré de la zone de stockage 32.

On comprend à la lecture de la description ci-dessus que l'agencement d'étanchéité selon la présente invention permet une simplicité d'installation des barres de toit par l'utilisateur mais également de garantir une barrière acoustique et une bonne canalisation de l'eau dans les deux configurations du joint à savoir avec ou sans barres de toit. En effet, il sera compris que la forme du pied de barre de toit assure une bonne canalisation de l'eau même lorsque le joint est escamoté dans la zone de stockage.

L'invention n'est nullement limitée au mode de réalisation décrit et illustré qui n'a été donné qu'à titre d'exemple.

## Revendications

1. Agencement d'étanchéité d'une caisse (2) de véhicule automobile, monté entre cette caisse (2) et un cadre de porte (3), comportant au moins un premier moyen de fixation (29, 30) sur lequel peut être monté un dispositif de barres de toit (10, 20) et comportant au moins un joint d'étanchéité (40) solidaire de la caisse (2), ce joint d'étanchéité (40) pouvant être escamoté de sa position initiale déployée entre le côté de caisse (2) et le cadre de porte (3) vers une position rangée à l'intérieur d'une zone de stockage (32) lorsque ce dispositif (10, 20) est fixé sur le véhicule, ce joint d'étanchéité (40) pouvant en outre être déployé de la position de la zone de stockage (32) vers la position initiale déployée lorsque le dispositif de barres de toit (10, 20) est enlevé du véhicule, **caractérisé en ce que** le dispositif de barres de toit (10, 20) comporte au moins un pied de barre (20) apte à coopérer avec le premier moyen de fixation (29, 30) pour être solidarisé à la structure du véhicule, et **en ce que** la zone de stockage (32) est formée entre ce pied (20) et la structure du véhicule sur laquelle le pied (20) est en appui, par la réalisation d'un embouti (31) dans le pied de barre de toit (20).

2. Agencement d'étanchéité selon l'une des revendications précédentes, **caractérisé en ce que** la zone de stockage (32) présente des dimensions aptes à contenir l'ensemble du joint d'étanchéité (40).

3. Agencement d'étanchéité selon l'une des revendications précédentes, **caractérisé en ce que** la zone de stockage (32) est réalisée à proximité du premier moyen de fixation (29, 30), la zone de stockage (32) étant située plus proche de l'extérieur du véhicule que ce premier moyen de fixation (29, 30).

4. Agencement d'étanchéité selon l'une des revendications précédentes, **caractérisé en ce que** le pied de barre de toit (20) est formé d'au moins une zone centrale arrondie (25) qui présente, lorsque le pied (20) est fixé sur la caisse (2), une forme sensiblement complémentaire de celle du cadre de porte (3).

5. Barre de toit (10,20) pour véhicule automobile, du type comportant au moins un pied de barre (20) apte à coopérer avec un premier moyen de fixation (29,30) pour être solidarisé à la structure du véhicule, **caractérisé en ce qu'**une zone de stockage (32), disposé entre ce pied (20) et la structure du véhicule sur laquelle le pied (20) est en appui, est formée par la réalisation d'un embouti (31) dans le pied de barre de toit (20).

6. Barre de toit selon la revendication 5, **caractérisé en ce que** la zone de stockage (32) présente des dimensions aptes à contenir l'ensemble d'un joint d'étanchéité (40).

7. Barre de toit selon l'une des revendications 5 ou 6, **caractérisé en ce que** la zone de stockage (32) est réalisée à proximité d'une patte de fixation (26) formée par une extrémité du pied de barre (20), cette patte de fixation (26) étant apte à coopérer avec le premier moyen de fixation (29, 30).

8. Véhicule automobile, **caractérisé en ce qu'**il comporte au moins un agencement d'étanchéité selon l'une des revendications 1-4.

## Claims

1. Motor vehicle bodywork (2) sealing arrangement mounted between this bodywork (2) and a doorframe (3), comprising at least a first attachment means (29, 30) onto which a roof-bar device (10, 20) can be mounted and comprising at least one seal (40) secured to the bodywork (2), this seal (40) being able to be retracted from its initial, deployed position between the side of the bodywork (2) and the doorframe (3) to a position stowed inside a storage zone (32) when this device (10, 20) is attached to the vehicle, this seal (40) also being able to be deployed from the storage zone (32) position to the initial, deployed position when the roof-bar device (10, 20) is removed from the vehicle, **characterized in that** the roof-bar device (10, 20) comprises at least one bar stand (20) capable of interacting with the first attachment means (29, 30) in order to be secured to the vehicle structure, and **in that** the storage zone (32) is formed between this stand (20) and the vehicle structure on which the stand (20) rests, by the production of a swaged form (31) in the roof-bar stand (20).

2. Sealing arrangement according to the preceding claim, **characterized in that** the storage zone (32) has dimensions capable of containing the whole seal (40).

3. Sealing arrangement according to one of the preceding claims, **characterized in that** the storage zone (32) is produced close to the first attachment means (29, 30), the storage zone (32) being situated closer to the outside of the vehicle than this first attachment means (29, 30).

4. Sealing arrangement according to one of the preceding claims, **characterized in that** the roof-bar stand (20) is formed of at least one rounded central zone (25) which has, when the stand (20) is attached to the bodywork (2), a shape that substantially matches that of the doorframe (3).

5. Roof bar (10, 20) for a motor vehicle, of the type comprising at least one bar stand (20), capable of interacting with a first attachment means (29, 30) in order to be secured to the vehicle structure, **characterized in that** a storage zone (32), placed between this stand (20) and the vehicle structure on which the stand (20) rests, is formed by the production of a swaged form (31) in the roof-bar stand (20).

6. Roof bar according to Claim 5, **characterized in that** the storage zone (32) has dimensions capable of containing the whole of a seal (40).

7. Roof bar according to one of Claims 5 or 6, **characterized in that** the storage zone (32) is made close to a fastener (26) formed by one end of the bar stand (20), this fastener (26) being capable of interacting with the first attachment means (29, 30).

8. Motor vehicle, **characterized in that** it comprises at least one sealing arrangement according to one of Claims 1-4.

## Patentansprüche

1. Dichtungsanordnung für eine Kraftfahrzeugkarosserie (2), die zwischen dieser Karosserie (2) und einem Türrahmen (3) angebracht ist, mit mindestens einem ersten Befestigungsmittel (29, 30), an dem eine Dachrelingvorrichtung (10, 20) angebracht werden kann, und mit mindestens einer fest mit der Karosserie (2) verbundenen Dichtung (40), wobei diese Dichtung (40) aus ihrer entfalteten Anfangsposition zwischen der Seite der Karosserie (2) und dem Türrahmen (3) in eine im Inneren eines Lagerungsbereichs (32) angeordnete Position geklappt werden kann, wenn diese Vorrichtung (10, 20) an dem Fahrzeug befestigt ist, wobei diese Dichtung (40) des Weiteren aus der Position des Lagerungsbereichs (32) in die entfaltete Anfangsposition entfaltet werden kann, wenn die Dachrelingvorrichtung (10, 20) vom Fahrzeug abgehoben ist, **dadurch gekennzeichnet, dass** die Dachrelingvorrichtung (10, 20) mindestens einen Relingfuß (20) aufweist, der mit dem ersten Befestigungsmittel (29, 30) zusammenwirken kann, um mit der Struktur des Fahrzeugs fest verbunden zu werden, und dass der Lagerungsbereich (32) durch Herstellung eines Ziehteils (31) im Fuß der Dachreling (20) zwischen diesem Fuß (20) und der Struktur des Fahrzeugs ausgebildet ist, an der der Fuß (20) anliegt.

2. Dichtungsanordnung nach dem vorhergehenden Anspruch, **dadurch gekennzeichnet, dass** der Lagerungsbereich (32) Abmessungen aufweist, die zur Aufnahme des Aufbaus der Dichtung (40) geeignet sind.

3. Dichtungsanordnung nach einem der vorhergehenden Ansprüche, **dadurch gekennzeichnet, dass** der Lagerungsbereich (32) in der Nähe des ersten Befestigungsmittels (29, 30) hergestellt ist, wobei sich der Lagerungsbereich (32) näher an der Außenseite des Fahrzeugs befindet als dieses erste Befestigungsmittel (29, 30).

4. Dichtungsanordnung nach einem der vorhergehenden Ansprüche, **dadurch gekennzeichnet, dass** der Dachrelingfuß (20) aus mindestens einem abgerundeten mittleren Bereich (25) gebildet ist, der, wenn der Fuß (20) an der Karosserie (2) befestigt ist, eine Form aufweist, die zu der des Türrahmens (3) im Wesentlichen komplementär ist.

5. Dachreling (10, 20) für ein Kraftfahrzeug jener Art, die mindestens einen Relingfuß (20) aufweist, der mit einem ersten Befestigungsmittel (29, 30) zusammenwirken kann, um mit der Struktur des Fahrzeugs fest verbunden zu werden, **dadurch gekennzeichnet, dass** das Lagerungsbereich (32), der zwischen diesem Fuß (20) und der Struktur des Fahrzeugs, an der der Fuß (20) anliegt, angeordnet ist, durch Herstellung eines Ziehteils (31) im Fuß der Dachreling (20) gebildet wird.

6. Dachreling nach Anspruch 5, **dadurch gekennzeichnet, dass** der Lagerungsbereich (32) Abmessungen aufweist, die zur Aufnahme des Aufbaus einer Dichtung (40) geeignet sind.

7. Dachreling nach einem der Ansprüche 5 oder 6, **dadurch gekennzeichnet, dass** der Lagerungsbereich (32) in der Nähe eines Befestigungsansatzes (26) ausgebildet ist, der durch ein Ende des Relingfußes (20) gebildet wird, wobei dieser Befestigungsansatz (26) mit dem ersten Befestigungsmittel (29, 30) zusammenwirken kann.

8. Kraftfahrzeug, **dadurch gekennzeichnet, dass** es mindestens eine Dichtungsanordnung nach einem der Ansprüche 1 - 4 aufweist.
